# EUROPÄISCHE PATENTSCHRIFT

(11) **EP 2 492 140 B1**
(45) Veröffentlichungstag und Bekanntmachung des Hinweises auf die Patenterteilung: **23.09.2015**
(21) Anmeldenummer: 12155375.4
(22) Anmeldetag: 14.02.2012
(51) Int. Cl.: B60N 2/68, B60N 2/427, B60R 22/28, B60R 22/18

(54) **Fahrzeugsitz, Verfahren zum Reduzieren einer Kräfte- und/oder Momenteinleitung und Verwendung einer Gurtaufhängungsbefestigung**
Vehicle seat, method for reducing the introduction of forces or momentum and use of a belt mounting fixture
Siège de véhicule, procédé de réduction d'une introduction de forces et/ou de moment et utilisation d'une fixation de suspension de ceinture

(30) Priorität: 25.02.2011 DE 102011012461
(43) Veröffentlichungstag der Anmeldung: 29.08.2012
(73) Patentinhaber: GRAMMER AG, 92224 Amberg (DE)
(72) Erfinder: Haner, Markus, 92665 Altenstadt (DE); Käßner, Dirk, 92245 Kümmersbruck (DE)
(74) Vertreter: Hannke, Christian

(56) Entgegenhaltungen:
- EP-A2- 0 870 652
- DE-A1- 10 045 328
- DE-A1- 10 251 081

## Beschreibung

Die Erfindung betrifft einerseits einen Fahrzeugsitz mit einem Sitzteil, mit einer Rückenlehne und mit einer an dem Fahrzeugsitz integrierten Gurtrückhaltevorrichtung umfassend eine Gurtaufhängung, bei welchem die Gurtaufhängung eine Befestigung zum Befestigen an der Rückenlehne aufweist.

Die Erfindung betrifft andererseits einen Fahrzeugsitz mit einem Sitzteil, mit einer Rückenlehne und mit einer an dem Fahrzeugsitz integrierten Gurtrückhaltevorrichtung umfassend eine Gurtaufhängung, bei welchem zwischen dem Sitzteil und der Rückenlehne ein Verstellmechanismus angeordnet ist, bei welchem die Gurtaufhängung eine Einrichtung zum Montieren an der Rückenlehne und bei welchem die Rückenlehne eine Einrichtung zum Halten der Montiereinrichtung umfasst, wobei die Montiereinrichtung an der Halteeinrichtung angeordnet ist.

Darüber hinaus betrifft die Erfindung ein Verfahren zum Reduzieren einer Kräfte- und/oder Momenteneinleitung an einem Verstellmechanismus zwischen einem Sitzteil und einer Rückenlehne eines Fahrzeugsitzes mit einer integrierten Gurtrückhaltevorrichtung.

Die Erfindung betrifft auch eine Verwendung einer Gurtaufhängungsbefestigung einer Fahrzeugsitzgurtrückhaltevorrichtung.

Es ist bekannt, eine Gurtrückhaltevorrichtung zum Zurückhalten eines Fahrzeuginsassen auf einem Fahrzeugsitz unmittelbar an bzw. in dem Fahrzeugsitz zu integrieren. Hierbei sind ein Gurtmagazin und eine Einrichtung zum Arretieren eines Gurtbeschlages an einem Sitzteil des Fahrzeugsitzes und eine Gurtumlenkeinrichtung mittels einer gegebenenfalls höhenverstellbaren Gurtaufhängung an einer Rückenlehne des Fahrzeugsitzes angeordnet. Insofern ist es konstruktiv gut möglich, einen Fahrzeugsitz mit integriertem Fahrzeuginsassenschutz unabhängig von sonstigen Karosseriegegebenheiten bereitstellen zu können. Nachteilig hierbei ist es jedoch, dass im Falle eines Fahrzeugcrashs über die Gurtaufhängung relativ große Rückhaltekräfte in die Rückenlehne des Fahrzeugsitzes eingeleitet werden. Diese Kräfte können oftmals ein Vielfaches des Körpergewichts des auf dem Fahrzeugsitz angegurteten Fahrzeuginsassen betragen. Dies führt unter anderem zu einer enormen und meist schlagartigen Belastung des Verstellmechanismus, mittels welchem die Rückenlehne an dem Sitzteil befestigt ist. Nicht selten wird der Verstellmechanismus irreparabel beschädigt und muss ausgetauscht werden. Aus der DE 102 51 081 A1 ist ein Gurtumlenker an einem Sitz bekannt, welcher gleichzeitig als Crashelement ausgestaltet ist, wobei bei einem Unfall und der dann auftretenden Gurtbelastung zwei an der Sitzunterkonstruktion befestigte Blechlaschen des Gurtumlenkers unter Aufnahme von Verformungsenergie nach außen ausknicken, und sich der Gurtumlenker mit Gurtaufhängung nach unten bewegt, bis er mit der Sitzkonstruktion zusammenprallt. Dabei soll gleichzeitig der Abstand zwischen Kopf des Sitzinsassen und Gurtumlenker vergrößert und dadurch die Gefahr von Verletzungen minimiert werden. Allerdings muss nach einem Unfall der gesamte Gurtumlenker ausgetauscht und ein neues Exemplar kostenintensiv an der Sitzkonstruktion befestigt werden.

Es ist daher Aufgabe der Erfindung, insbesondere dem eingangs genannten Nachteil der irreparablen Beschädigung des Verstellmechanismus abzuhelfen. Andererseits soll eine möglichst einfache Nachrüstbarkeit der Gurtaufhängung nach einem Unfall möglich sein.

Nach einem ersten Aspekt der Erfindung wird die vorliegende Aufgabe von einem Fahrzeugsitz mit einem Sitzteil, mit einer Rückenlehne und mit einer an dem Fahrzeugsitz integrierten Gurtrückhaltevorrichtung umfassend eine Gurtaufhängung, bei welchem die Gurtaufhängung eine Befestigung zum Befestigen an der Rückenlehne aufweist, gelöst, wobei sich der Fahrzeugsitz dadurch auszeichnet, dass die Befestigung, welche gurtaufhängungsseitig eine Montiereinrichtung und rückenlehnenseitig eine Halteeinrichtung für die Montiereinrichtung vorsieht, ein Crash-Element mit einem Verformungsbereich zum Abbau von kinetischer Energie bei einem unfallbedingten Aktivieren der Gurtrückhaltevorrichtung umfasst, wobei das Crash-Element zwei voneinander beabstandete Anlageebenen aufweist, welche durch eine Rippenstruktur voneinander distanziert sind, wobei die Rippenstruktur Verformungsarbeit und damit Abbau kinetischer Energie leistet, wobei das Crash-Element zwischen der Montiereinrichtung und der Halteeinrichtung angeordnet ist, wobei eine erste der Anlageebenen zum Befestigen an der Montiereinrichtung und eine zweite der Anlageebenen zum Befestigen an der Halteeinrichtung dient, wobei der Verformungsbereich des Crash-Elements nicht direkt von der Montier- und/oder Halteeinrichtung, sondern mittels des eigenständigen Crash-Elements ausgebildet ist.

Vorteilhafter Weise kann mittels der erfindungsgemäß gestalteten Befestigung die im Falle eines Fahrzeugcrashs auftretende Belastung speziell an dem Verstell mechanismus, mittels welchem die Rückenlehne an dem Sitzteil befestigt ist, reduziert werden, indem durch geleistete Verformungsarbeit kinetische Energie abgebaut wird. Hierdurch kann eine schlageartige Belastung insbesondere des Verstellmechanismus vermieden oder zumindest abgeschwächt werden.

Der Begriff "Crash-Element" beschreibt im Sinne der Erfindung eine Komponente einer in einem Fahrzeugsitz integrierten Gurtrückhaltevorrichtung, mittels welcher ein konstruktiv bedingter Verformungsbereich realisierbar ist, der im Falle eines Fahrzeugcrashs gezielt Verformungsarbeit leisten kann.

Ein derartiger Verformungsbereich kann bei einer günstigen Sitzstruktur gegebenenfalls direkt von einem Blechteil der Gurtaufhängung und/oder der Rückenlehne ausgestaltet sein.

Erfindungsgemäß ist der Verformungsbereich als eigenständige Komponente ausgestaltet, da hierdurch ein größerer Gestaltungsfreiraum erreicht werden kann.

Eine bevorzugte Ausführungsvariante sieht vor, dass dem Verformungsbereich eine Hauptverformungsrichtung innewohnt, welche im Wesentlichen in Richtung einer Rückenlehnenlängserstreckung gerichtet ist.

Findet eine Verformung des Crash-Elements hauptsächlich in Richtung der Rückenlehnenlängserstreckung statt, kann hierbei zusätzlich ein werkseitiger Abstand zwischen der Gurtaufhängung und dem Verstellmechanismus reduziert werden, wodurch sich vorteilhafter Weise auch ein Hebelweg zwischen der Gurtaufhängung und dem Verstellmechanismus verkürzt.

Insofern sieht eine weitere bevorzugte Ausführungsform des Fahrzeugsitzes vor, dass zwischen dem Sitzteil und der Rückenlehne ein Verstellmechanismus angeordnet ist, bei welchem die Montiereinrichtung an der Halteeinrichtung angeordnet ist, wobei sich der Fahrzeugsitz durch eine Einrichtung zum Verkürzen eines Hebelwegs zwischen der Gurtaufhängung und dem Verstellmechanismus bei einem unfallbedingten Aktivieren der Gurtrückhaltevorrichtung auszeichnet.

Die Einrichtung zum Verkürzen des Hebelwegs kann vielfältig ausgestaltet sein. Vorzugsweise umfasst sie ein Crash-Element mit einem Verformungsbereich zum Abbau von kinetischer Energie mit einer Hauptverformungsrichtung, welche im Wesentlichen in Richtung einer Rückenlehnenlängserstreckung gerichtet ist.

Der Begriff "Montiereinrichtung" beschreibt im Sinne der Erfindung ein gurtaufhängungsseitiges Bauteil, insbesondere ein blechartiges Bauteil, mittels welchem die Gurtaufhängung an einer Rückenlehnenstruktur befestigbar ist. Insofern kann die Montiereinrichtung ein Bestandteil der Gurtaufhängung sein.

In diesem Sinne beschreibt der Begriff "Halteeinrichtung" ein rückenlehnenseitiges Bauteil, insbesondere ein blechartiges Bauteil, an welchem die Gurtaufhängung mit ihrer Montiereinrichtung befestigt ist. Insofern kann die Halteeinrichtung ein Bestandteil der Rückenlehnenstruktur sein.

Speziell im Hinblick auf den zweiten Aspekt der Erfindung wird die vorliegende Aufgabe auch von einem hier nicht beanspruchten Verfahren zum Reduzieren einer Kräfte- und/oder Momenteneinleitung an einem Verstellmechanismus zwischen einem Sitzteil und einer Rückenlehne eines Fahrzeugsitzes mit einer integrierten Gurtrückhaltevorrichtung gelöst, bei welchem bei einem unfallbedingten Aktivieren der Gurtrückhaltevorrichtung ein Hebelweg zwischen einer Gurtaufhängung der Gurtrückhaltevorrichtung und dem Verstellmechanismus verkürzt wird.

Eine derartige vorteilhafte Hebelwegverkürzung ist aus dem Stand der Technik bisher nicht bekannt.

Erfindungsgemäß ist wie erwähnt vorgesehen, dass die Gurtaufhängung eine Einrichtung zum Montieren an der Rückenlehne und die Rückenlehne eine Einrichtung zum Halten der Montiereinrichtung umfasst, wobei zwischen der Montiereinrichtung und der Halteeinrichtung das Crash-Element angeordnet ist. Nach einer weiteren vorteilhaften Konstruktionsvariante ist dieses Crash-Element im Wesentlichen in Richtung einer Rückenlehnenlängserstreckung elastisch oder plastisch verformbar.

Der Verformungsbereich des Crash-Elements ist nicht direkt von herkömmlichen Bauteilen oder Bauteilgruppen, wie etwa der Montier- und/oder Halteeinrichtung, des Fahrzeugsitzes ausgestaltet, sondern mittels eines eigenständigen Crash-Elements realisiert, welches zwischen der Montiereinrichtung und der Halteeinrichtung angeordnet ist.

Vorteilhafter Weise könnten hierdurch herkömmliche Montier- bzw. Halteeinrichtungen verwendet werden, wodurch gegebenenfalls auch ältere Fahrzeugsitze nachgerüstet werden könnten.

Der Begriff "Montiereinrichtung" beschreibt im Sinne der Erfindung beispielsweise ein Blechteil der Gurtaufhängung, welches in der Regel an ein korrespondierendes Blechteil einer Sitzstruktur im Bereich der Rückenlehne angeschweißt ist.

Dementsprechend bezeichnet der Begriff "Halteeinrichtung" im Sinne der Erfindung das korrespondierende Blechteil der Sitzstruktur.

Herkömmlicherweise sind beide Blechteile aneinander liegend miteinander verschweißt, um eine feste Verbindung zu schaffen. Hierbei sind die beiden Blechteile zueinander nicht beweglich, es sei denn die Verbindung wird zerstört.

Ist die Montiereinrichtung beabstandet von der Halteeinrichtung an dieser angeordnet, kann konstruktiv einfach ein genügend großer Bauraum für einen erforderlichen Verformungsweg bereitgestellt werden.

Das Crash-Element kann mit wenig Aufwand gut in eine herkömmliche Fahrzeugsitzstruktur eingebettet werden, wenn das Crash-Element einen blechartigen Grundkörper mit der wenigstens einen Blechrippe sowie mit den wenigstens zwei voneinander beabstandeten Anlageebenen aufweist, wobei die wenigstens eine Blechrippe im Wesentlichen horizontal ausgerichtet ist.

Insofern ist die Blechrippe im Wesentlichen quer zur Hauptverformungsrichtung ausgerichtet.

Aufgrund des blechartigen Grundkörpers kann eine einfach bauende und zuverlässig wirkende mechanische Sicherheitseinrichtung bereitgestellt werden.

Bei dem blechartigen Grundkörper kann es sich vorteilhafter Weise um ein Stanzteil handeln. Insofern kann das Crash-Element einfach und kostengünstig hergestellt werden.

Der blechartige Grundkörper kann mit einer Materialstärke zwischen 0,5 mm und 3 mm hergestellt sein, je nachdem welcher Verformungsarbeit von dem Crash-Element geleistet werden soll.

Mittels einer oder vorzugsweise mehrerer Blechrippen können die Montiereinrichtung und die Halteeinrichtung unaufwändig ausreichend weit voneinander beabstandet werden.

Erfindungsgemäß dient eine erste der Anlageebenen zum Befestigen an der Montiereinrichtung und eine zweite der Anlageebenen zum Befestigen an der Halteeinrichtung. Vorteilhafter Weise kann die wenigstens eine Blechrippe mit der ersten der Anlageebenen gurtaufhängungsseitig an der Montiereinrichtung und mit der zweiten der Anlageebenen rückenlehnenseitig an der Halteeinrichtung angeschweißt sein. Hierdurch kann das vorliegende Crash-Element besonders kostengünstig an einem Fahrzeugsitz mit integrierter Gurtrückhaltevorrichtung realisiert werden.

Sind Blechrippen des Crash-Elements im Wesentlichen horizontal ausgerichtet angeordnet, kann die Hauptverformungsrichtung in Richtung der Rückenlehnenlängserstreckung betriebssicher vorgegeben werden, indem sich die hintereinander angeordneten Blechrippen des Crash-Elements in diese Richtung verbiegen können, wenn die auf das Crash-Element einwirkenden Kräfte aufgrund eines Fahrzeugcrashs einen kritischen Wert erreichen oder überschreiten.

Vorteilhafter Weise kann der Verformungsweg je nach Anwendungserfordernis konstruktiv einfach variiert werden, wenn die wenigstens eine Blechrippe gegenüber wenigstens einer der Anlageebenen einen Winkel von mehr als 10°, vorzugsweise von mehr als 20°, und weniger als 170°, vorzugsweise weniger als 160°, idealerweise von 90°, aufweist.

Vorzugsweise kann mittels des erfindungsgemäßen Crash-Elements ein Verformungsweg von mehr als 10 mm, vorzugsweise von 20 mm oder mehr, erzielt werden.

Die Parameter des Verformungswegs können darüber hinaus auch durch die Höhe des Crash-Elements bzw. einer Blechrippe hiervon beeinflusst werden.

Beispielsweise weist die Höhe einen Wert zwischen 10 mm und 50 mm auf. Diese Werte sind jedoch nicht zwingend einschränkend zu verstehen.

Das Verformungsverhalten des Crash-Elements kann weiter vorteilhaft beeinflusst werden, wenn der blechartige Grundkörper wenigstens mehr als einmal, gebogen ist.

Insbesondere können die Anlageebenen durch ein entsprechendes Umbiegen von Blechrippenenden nahezu beliebig groß gewählt werden, wodurch das Crash-Element großflächig und damit besonders innig an den Montier- und Halteeinrichtungen befestigt werden kann.

Vorzugsweise ist der blechartige Grundkörper doppelstegig oder mehrstegig ausgestaltet, das heißt das Crash-Element stellt mehr als eine Blechrippe zur Verfügung.

Beispielsweise sind zwei Stege bzw. Blechrippen des Crash-Elements zwischen 1 mm und 20 mm voneinander beabstandet angeordnet.

In einem einfachen Fall kann der blechartige Grundkörper u-förmig gebogen sein und an seinen Enden zwei zusätzlich angebogene Laschen aufweisen.

Die beiden Laschen können vorteilhaft zwei voneinander beabstandete rückenlehnenseitige Anlageebenen bilden, während der mittlere Schenkel des u-förmig gebogenen Grundkörpers eine vorteilhaft zusammenhängende und große gurtaufhängungsseitige Anlageebene bilden kann.

Die vorliegende Erfindung kann vorteilhaft weiter entwickelt werden, wenn das Crash-Element ein Materialdepot zur Verlängerung eines Verformungsweges aufweist, wobei das Materialdepot insbesondere zumindest teilweise hinter einer Montiereinrichtungsebene und/oder einer Halteeinrichtungsebene angeordnet ist.

Ein derartiges Materialdepot kann baulich sehr einfach bereits dadurch realisiert sein, wenn ein u-förmig gebogener Grundkörper einen kürzeren und einen längeren Steg zwischen der Montiereinrichtung und der Halteeinrichtung ausgestaltet.

Hierbei kann der längere Steg vorteilhafter Weise bis hinter die Montiereinrichtungsebene und/oder einer Halteeinrichtungsebene reichen.

Vorzugsweise ist der längere Steg nochmals gebogen ausgestaltet, so dass weiteres Material zum Verlängern des Verformungsweges vorhanden ist.

Die Aufgabe der Erfindung wird des Weiteren von einer hier nicht beanspruchten Verwendung einer Gurtaufhängungsbefestigung einer Fahrzeugsitzgurtrückhaltevorrichtung zum Verkürzen eines Hebelweges zwischen der Gurtaufhängung und einem Verstellmechanismus zwischen einer Rückenlehne und einem Sitzteil des Fahrzeugsitzes bei einem unfallbedingten Aktivieren der an dem Fahrzeugsitz integrierten Gurtrückhaltevorrichtung gelöst.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand anliegender Zeichnung und nachfolgender Beschreibung erläutert, in welchen beispielhaft ein Fahrzeugsitz mit einer erfindungsgemäßen Befestigung zwischen einer Gurtaufhängung und einer Rückenlehne dargestellt und beschrieben ist.

In der Zeichnung zeigen:
- Figur 1: schematisch eine perspektivische Teilansicht eines Fahrzeugsitzes im Bereich einer Gurtaufhängung mit einer Befestigung umfassend ein Crash-Element zwischen einer gurtaufhängungsseitigen Montiereinrichtung und einer rückenlehnenseitigen Halteeinrichtung;
- Figur 2: schematisch eine weitere perspektivische Teilansicht der Gurtaufhängungsbefestigung aus der Figur 1, jedoch ohne gurtaufhängungsseitige Montiereinrichtung;
- Figur 3: schematisch eine perspektivische Ansicht des Fahrzeugsitzes aus der Figur 1;
- Figur 4: schematisch eine Ansicht eines weiteren Ausführungsbeispiels eines Aufbaus eines Crash-Elements im werksseitigen Ursprungszustand;
- Figur 5: schematisch eine Ansicht des Crash-Elements aus der Figur 4 nach einer geleisteten Verformungsarbeit;
- Figur 6: schematisch eine Ansicht einer Verformungsabfolge eines anderen Crash-Elements;
- Figur 7: schematisch eine Ansicht zweier blechartiger Grundkörper von alternativen Crash-Elementen;
- Figur 8: schematisch eine Ansicht weiterer blechartiger Grundkörper von weiteren alternativen Crash-Elementen; und
- Figur 9: schematisch ein weiteres Crash-Element mit eingezeichneten Blechrippenwinkel von 90°.

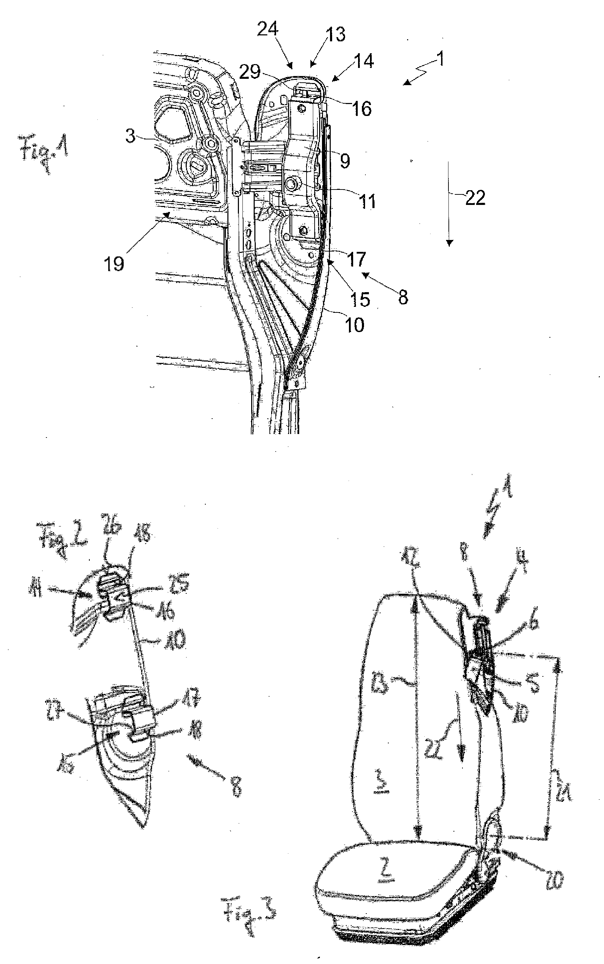

Der in den Figuren 1 bis 3 gezeigte Fahrzeugsitz 1 weist ein Sitzteil 2, eine Rückenlehne 3 und eine in den Fahrzeugsitz 1 integrierte Gurtrückhaltevorrichtung 4 auf.

Die Gurtrückhaltevorrichtung 4 ist hierbei durch einen Gurt 5 und eine Gurtaufhängung 6 dargestellt. Sie umfasst jedoch zumindest noch ein hier nicht gezeigtes Gurtmagazin sowie eine hier nicht gezeigte Arretiereinrichtung für einen Gurtbeschlag.

Oben links 7 - in Sitzrichtung gesehen - an der Rückenlehne 3 ist eine Befestigung 8 vorgesehen, mittels welcher die Gurtaufhängung 6 an der Rückenlehne 3 befestigt ist.

Die Befestigung 8 sieht gurtaufhängungsseitig eine Montiereinrichtung 9 und rückenlehnenseitig eine Halteeinrichtung 10 für die Montiereinrichtung 9 vor.

An der Montiereinrichtung 9 ist in etwa mittig eine Aufnahme 11 für einen Gurtumlenkbügel 12 platziert.

Zwischen der Montiereinrichtung 9 und der Halteeinrichtung 10 ist erfindungsgemäß ein Crash-Element 13 angeordnet, welches in diesem Ausführungsbeispiel ein oberes Verformungselement 14 und ein unteres Verformungselement 15 umfasst.

Die beiden Verformungselemente 14 und 15 weisen jeweils einen im Wesentlichen u-förmig gebogenen blechartigen Grundkörper 16 bzw. 17 auf.

Insofern handelt es sich bei dem Crash-Element 13 in diesem Ausführungsbeispiel um ein plastisch verformbares Crash-Element 13.

Die blechartigen Grundkörper 16 bzw. 17 sind hierbei derart konzipiert, dass sie Verformungsbereiche 18 (hier jeweils nur exemplarisch beziffert) zum Abbau von kinetischer Energie hinsichtlich eines unfallbedingten Auslösens der Gurtrückhaltevorrichtung 4 ausgestalten.

Bei einem unfallbedingten Auslösen der Gurtrückhaltevorrichtung 4 wirkt das Vielfache des Körpergewichts einer Person auf den blockierten Gurt 5 und insbesondere auf die Gurtaufhängung 6, über welche entsprechende Rückhaltekräfte oftmals schlagartig in eine Rückenlehnenstruktur 19 der Rückenlehne 3 eingeleitet werden.

Die hohe Position der Gurtaufhängung 6 oben links 4 an der Rückenlehne 3 führt zu einer relativ großen Belastung insbesondere an einem Verstellmechanismus 20 zwischen dem Sitzteil 2 und der Rückenlehne 3, da die an der Gurtaufhängung 6 eingeleiteten Rückhaltekräfte durch einen Hebelweg 21 zwischen der Gurtaufhängung 6 und dem Verstellmechanismus 20 nochmals verstärkt auf den Verstellmechanismus 20 wirken.

Vorteilhafter Weise können die Rückhaltekräfte durch an dem Crash-Element 13 geleistete Verformungsarbeit zumindest teilweise abgebaut werden, bevor sie auf die Halteeinrichtung 10 der Rückenlehnenstruktur 19 wirken können.

Besonders vorteilhaft ist es jedoch, dass das Crash-Element 13 derart konzipiert ist, dass es eine Hauptverformungsrichtung 22 aufweist, welche im Wesentlichen in Richtung einer Rückenlehnenlängserstreckung 23 gerichtet ist.

Speziell durch dieses Merkmal kann der Hebelweg 21 zwischen der Gurtaufhängung 6 und dem Verstellmechanismus 20 vorteilhafter Weise verkürzt werden, sobald sich das Crash-Element 13 unfallbedingt verformt.

Dies hat wiederum vorteilhafter Weise zur Folge, dass auf den Verstellmechanismus 20 geringere Kräfte bzw. Momente wirken, wodurch die Gefahr einer irreparablen Beschädigung des Verstellmechanismus 20 wesentlich reduziert wird.

Hierbei reichen bereits geringe Verformungswege von weniger als 50 mm aus, um eine wirksame Entlastung des Verstellmechanismus 20 zu bewirken.

Insofern verkörpert das Crash-Element 13 nicht nur eine Abbaueinrichtung von kinetischer Energie sondern insbesondere auch eine Einrichtung 24 zum Verkürzen des Hebelwegs 21.

Das Crash-Element 13 zeichnet sich des Weiteren durch zwei voneinander beabstandete Anlagenebenen 25 und 26 (beispielhaft nur an dem blechartigen Grundkörper 16 beziffert) aus, welche durch eine Rippenstruktur 27 (beispielhaft nur an dem blechartigen Grundkörper 17 beziffert) voneinander distanziert sind.

Die erste Anlageebene 25 dient zum Befestigen an der Montiereinrichtung 9 und die zweite Anlageebene 26 dient zum Befestigen an der Halteeinrichtung 10.

In diesem Ausführungsbeispiel ist die Befestigung 8 als Schweißkonstruktion ausgelegt, wodurch das Crash-Element 13 sehr kostengünstig in die Fahrzeugsitzstruktur bzw. in die Rückenlehnenstruktur 19 integriert werden kann.

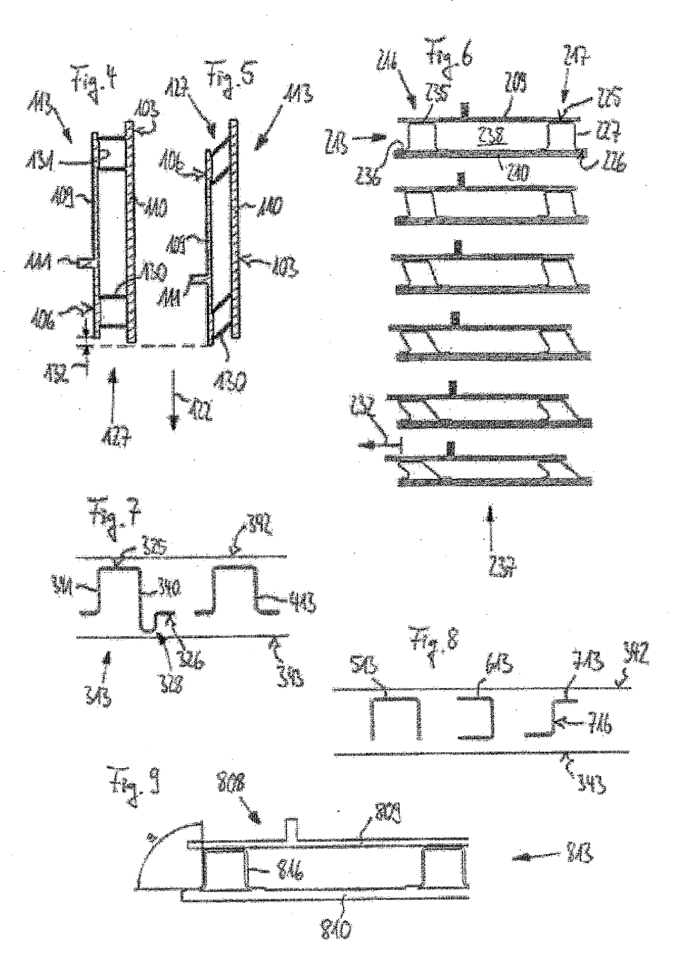

Die Rippenstruktur 27 weist gegenüber den beiden Anlageebenen 25 und 26 einen rechten Winkel a (siehe insbesondere auch Figur 9) auf und verläuft im Wesentlichen horizontal. Insofern ist die Rippenstruktur 27 im Wesentlichen quer zur Hauptverformungsrichtung 22 ausgerichtet.

Um im Bedarfsfall einen ausreichend großen Verformungsweg in Richtung der Hauptverformungsrichtung 22 bereitstellen zu können, umfasst das Crash-Element 13 ein Materialdepot 28, welches zumindest teilweise bis hinter die zweite Anlageebene 26 bzw. hinter eine Halteeinrichtungsebene hinausragt. Hierzu durchdringen die blechartigen Grundkörper 16 und 17 des Crash-Elements 13 die Halteeinrichtung 10 durch entsprechende Öffnungen 29 (hier nur exemplarisch an der Figur 1 beziffert).

Das in den Figuren 4 und 5 gezeigte weitere nicht erfindungsgemäße Crash-Element 113 weist eine Rippenstruktur 127 mit vier Einzelstegen 130 (hier nur exemplarisch beziffert) auf, die gerade ausgestaltet sind und in ihrer Ursprungslage (siehe Figur 4) senkrecht zwischen einer Montiereinrichtung 109 einer Gurtaufhängung 106 und einer Halteeinrichtung 110 einer Rückenlehne 103 ausgerichtet verschweißt sind.

Zur weiteren Stabilisierung des Crash-Elements 113 und zum einfacheren Ausrichten der vier geraden Einzelstege 130 bei der Herstellung des Crash-Elements 113 sind an der Montiereinrichtung 109 Absätze 131 in Gestalt einer Materialaufdickung vorgesehen.

In diesem alternativen Ausführungsbeispiel umfasst das Crash-Element 113 sogleich die Montiereinrichtung 109 und die Halteeinrichtung 110 und baut somit besonders kompakt.

Während das Crash-Element 113 sich nach der Darstellung gemäß der Figur 4 noch in der Ursprunglage befindet, ist es nach der Darstellung gemäß der Figur 5 aufgrund einer unfallbedingten Aktivierung einer hier nicht gezeigten Gurtrückhaltevorrichtung in seine Hauptverformungsrichtung 122 verformt.

Hierbei ist gut zu erkennen, wie sich die Einzelstege 130 neigen und sich die Montiereinrichtung 109 gegenüber der Halteeinrichtung 110 um einen Verformungsweg 132 verlagert hat.

Hierbei konnte erstens Verformungsarbeit geleistet und zweitens ein Hebelweg zwischen einer Gurtaufhängung und einem Verstellmechanismus vorteilhaft verkürzt werden.

Bei dem in der Figur 6 gezeigten Ausführungsbeispiel weist ein Crash-Element 213 zwei u-förmig gebogene blechartige Grundkörper 216 und 217 auf, welche eine Montiereinrichtung 209 und eine Halteeinrichtung 210 distanziert miteinander verbinden.

Das Crash-Element 213 weist eine Rippenstruktur 227 auf und besitzt eine montiereinrichtungsseitige erste Anlageebene 225 sowie eine hiervon beabstandete halteeinrichtungsseitige zweite Anlageebene 226.

Die erste Anlageebene 225 ist durch einen ebenen Teilbereich 235 realisiert, der an der Montageeinrichtung 209 anliegt und daran angeschweißt ist.

Die zweite Anlageebene 226 ist durch Endlaschen 236 (nur exemplarisch beziffert) gebildet, die an der Halteeinrichtung 210 anliegen und dort verschweißt sind.

Gemäß der in der Figur 6 gezeigten Verformungsabfolge 237 ist gut zu erkennen, wie sich das Crash-Element 213 verformt und einerseits vorteilhafte Verformungsarbeit leistet und andererseits einen vorteilhaften Verformungsweg 232 bereitstellt, um einen Hebelweg zwischen einer Gutaufhängung und einem Verstellmechanismus verkürzt, wie vorstehend bereits mehrfach beschrieben.

Hierbei ist auch gut zu erkennen, wie sich die Montiereinrichtung 209 im Zuge der Verformungsabfolge 237 immer weiter an die Halteeinrichtung 210 annähert und hierbei eine ursprüngliche Bauhöhe 238 des Crash-Elements 213 sukzessive verringert wird.

Insofern ist es vorteilhaft, wenn die Bauhöhe 238 des Crash-Elements 213 auch unter dem Gesichtspunkt des erforderlichen Verformungswegs 232 gewählt wird.

Die in der Figur 7 gezeigten Ausführungsbeispiele zeigen links ein Crash-Element 313 mit einem im Wesentlichen u-förmig gebogenen blechartigen Grundkörper 316, welcher ein Materialdepot 328 an einem 340 seiner Schenkel 340, 341 vorhält.

Das Materialdepot 328 ist hierbei umgekehrt u-förmig ausgebildet und innerhalb des Schenkels 340 zwischen einer ersten Anlageebenen 325 und einer zweiten Anlageebene 326 des Crash-Elements 313 untergebracht.

Rechts zeigen die Ausführungsbeispiele ein Crash-Element 413, welches dem Aufbau des Crash-Elements 213 entspricht. Insofern wird auf die Beschreibung der Figur 6 verwiesen, um Wiederholungen zu vermeiden.

Beide Crash-Elemente 313 und 413 sind zwischen einer gurtaufhängungsseitigen Ebene 342 und einer rückenlehnenseitigen Ebene 343 gezeigt.

Die in der Figur 8 illustrierten weiteren Crash-Elemente 513, 613 und 713 zeigen weitere Varianten, wie ein Crash-Element gestaltet bzw. in einer Gurtaufhängungsbefestigung in Bezug auf die gurtaufhängungsseitige Ebene 342 und die rückenlehnenseitige Ebene 343 ausgerichtet sein kann.

Das nicht erfindungsgemäße Crash-Element 513 besitzt eine einfache U-Form.

Ebenso das Crash-Element 613. Dieses ist jedoch um 90° gedreht eingesetzt.

Das Crash-Element 713 besitzt demgegenüber einen s-förmig gebogenen blechartigen Grundkörper 716.

Die in der Figur 9 gezeigte Befestigung 808 entspricht im Wesentlichen dem Ausführungsbeispiel aus der Figur 6.

Hinsichtlich eines ersten blechartigen Grundkörpers 816 eines Crash-Elements 813 der Befestigung 808 ist ein Blechrippenwinkel a von 90° eingezeichnet, wobei das Crash-Element 813 mit einer gurtaufhängungsseitigen Montiereinrichtung 809 und einer rückenlehnenseitigen Halteeinrichtung 810 verschweißt ist.

Der Blechrippenwinkel a kann je nach erforderlichem Verformungsweg (siehe Bezugsziffer 232, Figur 6) jedoch auch mit einem anderen Wert gewählt werden, wie dies in der Einleitung bereits beschrieben ist.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteil
- 3: Rückenlehne
- 4: Gurtrückhaltevorrichtung
- 5: Gurt
- 6: Gurtaufhängung
- 7: oben links
- 8: Befestigung
- 9: Montiereinrichtung
- 10: Halteeinrichtung
- 11: Aufnahme
- 12: Gurtumlenkbügel
- 13: Crash-Element
- 14: oberes Verformungselement
- 15: unteres Verformungselement
- 16: erster Grundkörper
- 17: zweiter Grundkörper
- 18: Verformungsbereiche
- 19: Rückenlehnenstruktur
- 20: Verstellmechanismus
- 21: Hebelweg
- 22: Hauptverformungsrichtung
- 23: Längserstreckung
- 24: Verkürzungseinrichtung
- 25: erste Anlageebene
- 26: zweite Anlageebene
- 27: Rippenstruktur
- 28: Materialdepot
- 29: Öffnungen

- 103: Rückenlehne
- 109: Montiereinrichtung
- 110: Halteeinrichtung
- 113: Crash-Element
- 122: Hauptverformungsrichtung
- 127: Rippenstruktur
- 130: Einzelstege
- 131: Absätze
- 132: Verformungsweg

- 209: Montiereinrichtung
- 210: Halteeinrichtung
- 213: Crash-Element
- 216: erster Grundkörper
- 217: zweiter Grundkörper
- 225: erste Anlageebene
- 226: zweite Anlageebene
- 227: Rippenstruktur
- 232: Verformungsweg
- 235: Teilbereich
- 236: Endlaschen
- 237: Verformungsabfolge
- 238: Bauhöhe

- 313: Crash-Element
- 316: erster Grundkörper
- 325: erste Anlageebene
- 326: zweite Anlageebene
- 328: Materialdepot
- 340: erster Schenkel
- 341: zweiter Schenkel
- 342: gurtaufhängungsseitige Ebene
- 343: rückenlehnenseitige Ebene

- 413: Crash-Element

- 513: Crash-Element

- 613: Crash-Element

- 713: Crash-Element
- 716: s-förmiger Grundkörper

- 808: Befestigung
- 809: Montiereinrichtung
- 810: Halteeinrichtung
- 813: Crash-Element
- 816: blechartiger Grundkörper

- a: Blechrippenwinkel

## Patentansprüche

1. Fahrzeugsitz (1) mit einem Sitzteil (2), mit einer Rückenlehne (3) und mit einer an dem Fahrzeugsitz (1) integrierten Gurtrückhaltevorrichtung (4) umfassend eine Gurtaufhängung (6), bei welchem die Gurtaufhängung (6) eine Befestigung (8) zum Befestigen an der Rückenlehne (3) aufweist,
wobei die Befestigung (8), welche gurtaufhängungsseitig eine Montiereinrichtung (9; 209) und rückenlehnenseitig eine Halteeinrichtung (10; 210) für die Montiereinrichtung (9; 209) vorsieht, ein Crash-Element (13; 213; 313; 413; 613; 713; 813) mit einem Verformungsbereich (18) zum Abbau von kinetischer Energie bei einem unfallbedingten Aktivieren der Gurtrückhaltevorrichtung (4) umfasst, wobei das Crash-Element (13; 213; 313; 413; 613; 713; 813) zwei voneinander beabstandete Anlageebenen (25, 26; 225, 226; 325; 326) aufweist, welche durch eine Rippenstruktur (27; 227)voneinander distanziert sind, wobei die Rippenstruktur (27; 227) Verformungsarbeit und damit Abbau kinetischer Energie leistet,
**dadurch gekennzeichnet, dass**
das Crash-Element (13; 213; 313; 413; 613; 713; 813) zwischen der Montiereinrichtung (9; 209) und der Halteeinrichtung (10; 210) angeordnet ist, wobei eine erste (25; 225; 325) der Anlageebenen (25, 26; 225, 226; 325; 326) zum Befestigen an der Montiereinrichtung (9; 209) und eine zweite (26; 226; 326) der Anlageebenen (25, 26; 225, 226; 325; 326) zum Befestigen an der Halteeinrichtung (10; 210) dient, wobei der Verformungsbereich (18) des Crash-Elements (13; 213; 313; 413; 613; 713; 813) nicht direkt von der Montier- (9; 209) und/oder Halteeinrichtung (10; 210), sondern mittels des eigenständigen Crash-Elements (13; 213; 313; 413; 613; 713; 813) ausgebildet ist.

2. Fahrzeugsitz (1) nach Anspruch 1,
**dadurch gekennzeichnet, dass**
dem Verformungsbereich (18) eine Hauptverformungsrichtung (22) innewohnt, welche im Wesentlichen entlang einer Rückenlehnenlängserstreckung (23) gerichtet ist.

3. Fahrzeugsitz (1) nach Anspruch 1 oder 2,
**dadurch gekennzeichnet, dass**
das Crash-Element (13; 213; 313; 413; 613; 713; 813) im Wesentlichen in Richtung einer Rückenlehnenlängserstreckung (23) elastisch oder plastisch verformbar ist.

4. Fahrzeugsitz (1) nach einem der Ansprüche 1 bis 3,
**dadurch gekennzeichnet, dass**
das Crash-Element (13; 213; 313; 413; 613; 713; 813) einen blechartigen Grundkörper (16, 17) mit der wenigstens einen Blechrippe (27; 227) aufweist, wobei die wenigstens eine Blechrippe (27; 227) im Wesentlichen horizontal ausgerichtet ist.

5. Fahrzeugsitz (1) nach einem der Ansprüche 1 bis 4,
**dadurch gekennzeichnet, dass**
die wenigstens eine Blechrippe (27; 227) gegenüber wenigstens einer der Anlageebenen (25, 26; 225, 226; 325; 326) einen Winkel (a) von mehr als 10°, vorzugsweise von mehr als 20°, und weniger als 170°, vorzugsweise weniger als 160°, idealerweise von 90°, aufweist.

6. Fahrzeugsitz (1) nach Anspruch 4 oder 5,
**dadurch gekennzeichnet, dass**
der blechartige Grundkörper (16, 17) wenigstens mehr als einmal gebogen ist.

7. Fahrzeugsitz (1) nach einem der Ansprüche 1 bis 6,
**dadurch gekennzeichnet, dass**
das Crash-Element (13; 313) ein Materialdepot (28; 328) zur Verlängerung eines Verformungsweges aufweist, wobei das Materialdepot (28; 328) insbesondere zumindest teilweise hinter einer Montiereinrichtungsebene (25; 325) und/oder einer Halteeinrichtungsebene (26; 326) angeordnet ist.

8. Fahrzeugsitz (1) nach Anspruch 1,
**dadurch gekennzeichnet, dass**
zwischen dem Sitzteil (2) und der Rückenlehne (3) ein Verstellmechanismus (20) angeordnet ist, bei welchem die Montiereinrichtung (9; 209) an der Halteeinrichtung (10; 210) angeordnet ist,
wobei eine Einrichtung (24) zum Verkürzen eines Hebelwegs (21) zwischen der Gurtaufhängung (6) und dem Verstellmechanismus (20) bei einem unfallbedingten Aktivieren der Gurtrückhaltevorrichtung (4) vorgesehen ist.

## Claims

1. Vehicle seat (1) comprising a seat part (2), a backrest (3) and a seatbelt restraining apparatus (4) which is integrated on the vehicle seat (1) and comprises a seatbelt mount (6), in which the seatbelt mount (6) has a fastener (8) so that it can be fastened to the backrest (3), the fastener (8), which provides an attachment device (9; 209) on the seatbelt mount side and a retaining device (10; 210) for the attachment device (9; 209) on the backrest side, comprising a crash element (13; 213; 313; 413; 613; 713; 813) having a deformation region (18) in order to reduce kinetic energy when the seatbelt restraining apparatus (4) is activated as a result of an accident, the crash element (13; 213; 313; 413; 613; 713; 813) having two spaced apart contact planes (25, 26; 225, 226; 325; 326) which are distanced from one another by a rib structure (27; 227), the rib structure (27; 227) being responsible for the deformation and thus the reduction in kinetic energy, **characterised in that** the crash element (13; 213; 313; 413; 613; 713; 813) is arranged between the attachment device (9; 209) and the retaining device (10; 210), a first (25; 225; 325) of the contact planes (25, 26; 225, 226; 325; 326) serving to be fastened to the attachment device (9; 209) and a second (26; 226; 326) of the contact planes (25, 26; 225, 226; 325; 326) serving to be fastened to the retaining device (10; 210), the deformation region (18) of the crash element (13; 213; 313; 413; 613; 713; 813) being formed by the separate crash element (13; 213; 313; 413; 613; 713; 813) rather than being directly formed by the attachment device (9; 209) and/or the retaining device (10; 210).

2. Vehicle seat (1) according to claim 1, **characterised in that** a main deformation direction (22) is inherent in the deformation region (18) and is substantially directed along a backrest longitudinal extension (23).

3. Vehicle seat (1) according to either claim 1 or claim 2, **characterised in that** the crash element (13; 213; 313; 413; 613; 713; 813) is substantially elastically or plastically deformable in the direction of a backrest longitudinal extension (23).

4. Vehicle seat (1) according to any of claims 1 to 3, **characterised in that** the crash element (13; 213; 313; 413; 613; 713; 813) has a metal-sheet-like main body (16, 17) comprising the at least one metal-sheet rib (27; 227), the at least one metal-sheet rib (27; 227) being oriented substantially horizontally.

5. Vehicle seat (1) according to any of claims 1 to 4, **characterised in that** the at least one metal-sheet rib (27; 227) is at an angle (a) of more than 10°, preferably more than 20°, and less than 170°, preferably less than 160°, ideally 90°, with respect to at least one of the contact planes (25, 26; 225, 226; 325; 326).

6. Vehicle seat (1) according to either claim 4 or claim 5, **characterised in that** the metal-sheet-like main body (16, 17) is bent at least more than once.

7. Vehicle seat (1) according to any of claims 1 to 6, **characterised in that** the crash element (13; 313) has a material deposit (28; 328) for extending a deformation path, the material deposit (28; 328) being arranged behind an attachment device plane (25; 325) and/or a retaining device plane (26; 326) in particular at least in part.

8. Vehicle seat (1) according to claim 1, **characterised in that** an adjustment mechanism (20) is arranged between the seat part (2) and the backrest (3), in which the attachment device (9; 209) is arranged on the retaining device (10; 210), a device (24) for shortening a lever path (21) being provided between the seatbelt mount (6) and the adjustment mechanism (20) when the seatbelt restraining apparatus (4) is activated as a result of an accident.

## Revendications

1. Siège de véhicule (1), avec une partie d'assise (2), avec un dossier (3) et avec un dispositif de retenue de ceinture (4) intégré au siège de véhicule (1) comprenant une suspension de ceinture (6), dans lequel la suspension de ceinture (6) présente une fixation (8) pour la fixation sur le dossier (3),
la fixation (8), qui prévoit, côté suspension de ceinture, un dispositif de montage (9 ; 209) et, côté dossier, un dispositif de maintien (10 ; 210) pour le dispositif de montage (9 ; 209), comprenant un élément de collision (13 ; 213 ; 313 ; 413 ; 613 ; 713 ; 813) avec une zone de déformation (18) pour la réduction de l'énergie cinétique en cas d'activation, due à un accident, du dispositif de retenue de ceinture (4), l'élément de collision (13 ; 213 ; 313 ; 413 ; 613 ; 713 ; 813) présentant deux plans d'attache (25, 26 ; 225, 226 ; 325 ; 326) espacés l'un de l'autre qui sont écartés l'un de l'autre par une structure de renfort (27 ; 227), la structure de renfort (27 ; 227) fournissant un travail de déformation et donc une réduction de l'énergie cinétique,
**caractérisé en ce que**
l'élément de collision (13 ; 213 ; 313 ; 413 ; 613 ; 713 ; 813) est disposé entre le dispositif de montage (9 ; 209) et le dispositif de maintien (10 ; 210), un premier (25 ; 225 ; 325) des plans d'attache (25, 26 ; 225, 226 ; 325 ; 326) servant à la fixation sur le dispositif de montage (9 ; 209), et un deuxième (26 ; 226 ; 326) des plans d'attache (25, 26 ; 225, 226 ; 325 ; 326) servant à la fixation sur le dispositif de maintien (10 ; 210), la zone de déformation (18) de l'élément de collision (13; 213; 313 ; 413; 613; 713 ; 813) n'étant pas constituée directement par le dispositif de montage (9 ; 209) et/ou par le dispositif de maintien (10 ; 210), mais au moyen de l'élément de collision (13 ; 213 ; 313 ; 413 ; 613 ; 713 ; 813) autonome.

2. Siège de véhicule (1) selon la revendication 1,
**caractérisé en ce**
**qu'**une direction de déformation principale (22) est inhérente à la zone de déformation (18) et est dirigée essentiellement le long d'une direction longitudinale de dossier (23).

3. Siège de véhicule (1) selon la revendication 1 ou 2,
**caractérisé en ce que**
l'élément de collision (13 ; 213 ; 313 ; 413 ; 613 ; 713 ; 813) est déformable élastiquement ou plastiquement essentiellement dans la direction d'une étendue longitudinale de dossier (23).

4. Siège de véhicule (1) selon l'une des revendications 1 à 3,
**caractérisé en ce que**
l'élément de collision (13 ; 213 ; 313 ; 413 ; 613 ; 713 ; 813) présente un corps de base (16, 17) de type tôle avec le renfort en tôle (27 ; 227) au moins au nombre de un, le renfort en tôle (27 ; 227) au moins au nombre de un étant orienté essentiellement de façon horizontale.

5. Siège de véhicule (1) selon l'une des revendications 1 à 4,
**caractérisé en ce que**
le renfort en tôle (27 ; 227) au moins au nombre de un présente, par rapport à au moins un des plans d'attache (25, 26 ; 225, 226 ; 325 ; 326), un angle (a) supérieur à 10°, de préférence supérieur à 20°, et inférieur à 170°, de préférence inférieur à 160°, idéalement égal à 90°.

6. Siège de véhicule (1) selon la revendication 4 ou 5,
**caractérisé en ce que**
le corps de base (16, 17) de type tôle est au moins courbé plus d'une fois.

7. Siège de véhicule (1) selon l'une des revendications 1 à 6,
**caractérisé en ce que**
l'élément de collision (13 ; 313) présente un dépôt de matériau (28 ; 328) pour le prolongement d'une course de déformation, le dépôt de matériau (28 ; 328) étant en particulier disposé au moins partiellement derrière un plan de dispositif de montage (25 ; 325) et/ou un plan de dispositif de maintien (26 ; 326).

8. Siège de véhicule (1) selon la revendication 1,
**caractérisé en ce que**,
entre la partie d'assise (2) et le dossier (3), il est disposé un mécanisme de réglage (20) avec lequel le dispositif de montage (9 ; 209) est disposé sur le dispositif de maintien (10 ; 210),
un dispositif (24) étant prévu pour raccourcir une course de levier (21) entre la suspension de ceinture (6) et le mécanisme de réglage (20) en cas d'activation, due à un accident, du dispositif de retenue de ceinture (4).
